# EUROPEAN PATENT APPLICATION

(11) **EP 2 271 112 A1**
(43) Date of publication of application: **05.01.2011**
(21) Application number: 09731573.3
(22) Date of filing: 17.04.2009
(51) Int. Cl.: H04N 7/32

(54) **METHOD AND DEVICE FOR MULTI-VIEWPOINT VIDEO IMAGE ENCODING AND DECODING**

(30) Priority: 18.04.2008 CN 200810066587
(71) Applicant: Huawei Technologies Co., Ltd., Longgang District, Shenzhen Guangdong 518129 (CN)
(72) Inventor: GAO, Shan, Longgang District 518129 Shenzhen (CN); LIN, Sixin, Longgang District 518129 Shenzhen (CN); FU, Jiali, Longgang District 518129 Shenzhen (CN)
(74) Representative: Kreuz, Georg Maria
(86) International application number: PCT/CN2009/071343
(87) International publication number: WO 2009/127164

(57) **Abstract**

A method for coding multi-view video images is provided in the present invention. The method comprises: obtaining dependencies between inter-view reference images for a viewpoint image; and encoding the viewpoint image in motion skip mode according to the obtained dependencies and preset motion dependencies, where the motion dependencies exist between inter-view reference images for a non-anchor image which has no inter-view reference image. The existence of the inter-view reference image depends on the dependency between viewpoint images. When the video image at the current viewpoint lacks inter-view reference images, no reference image is available for invoking in the reference image queue, and the multi-view video image coding or decoding is impossible for the current block of the video image in motion skip mode. In the embodiments of the present invention, motion dependencies between inter-view reference images for the image under coding are set, and therefore, the coding and the decoding of the multi-view video images in motion skip mode are simplified, and the efficiency in and the gain of coding the multi-view video image are improved.

## Description

This application claims priority to Chinese Patent Application No. 200810066587.0, filed with the Chinese Patent Office on April 18, 2008 and entitled "METHOD AND APPARATUS FOR CODING AND DECODING MULTI-VIEW VIDEO IMAGES", which is hereby incorporated by reference in its entirety.

### FIELD OF THE INVENTION

The present invention relates to image coding and decoding technologies, and more particularly, to a method and an apparatus for coding and decoding multi-view video images.

### BACKGROUND OF THE INVENTION

The rapid development of multimedia communication technologies gives rise to the demand for multi-view videos. Multi-view video signals generated to meet the demand for multi-view videos refer to a number of video signals of the same scene. The video signals are taken by a plurality of cameras from different perspectives in different spatial positions. Coding for multi-view video signals is called "multi-view video coding". A hot topic in the multi-view video coding field now is to eliminate the redundant information in the videos at different viewpoints by using the correlation between different viewpoint images to improve efficiency of coding the multi-view video.

In the multi-view video images, view dependency exists between images at different viewpoints, and between different images at each viewpoint. That is, one or more coded images may serve as reference images of one or more other coded images. The video reference images which come from the same viewpoint as the current viewpoint of the coded image are called "intra-view reference images"; and the video reference images which come from a viewpoint different from the current viewpoint of the coded image are called "inter-view reference images". In a multi-view video image, the images at certain time points are called "anchor images", and the images taken at other time points are called "non-anchor images". Anchor images or non-anchor images may have inter-view reference images and/or intra-view reference images, or may have neither inter-view reference images nor intra-view reference images.

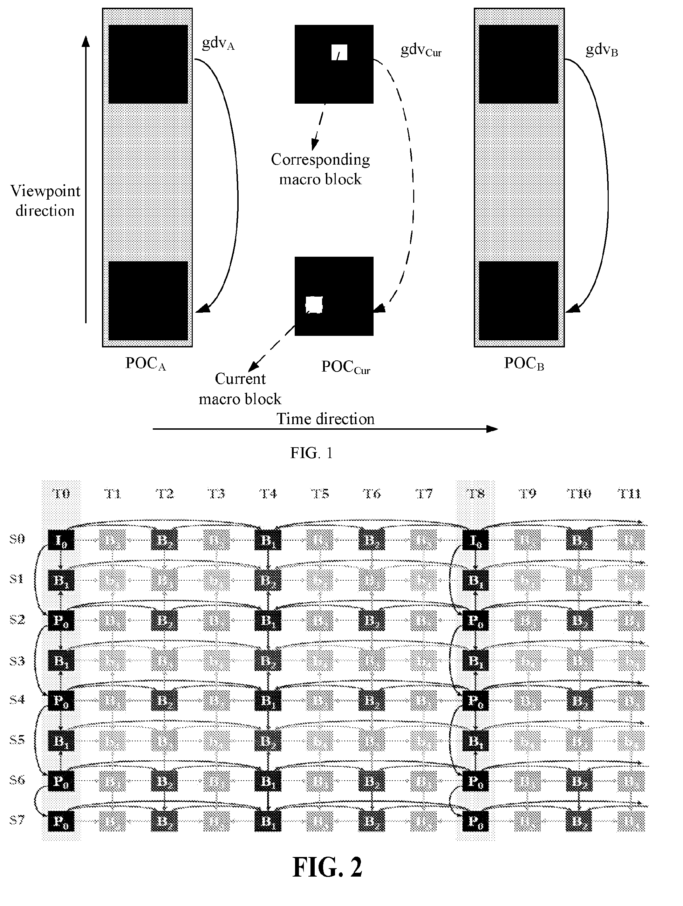

In the prior art of multi-view video image coding, various methods (for example, motion skip mode) are used to improve efficiency of coding multi-view video images. The motion skip mode draws upon the principle that the same object has the same motion features in different viewpoints. As shown in FIG. 1, at the time of coding the current macro block of the current viewpoint image on the coder, the motion information of the corresponding macro block in the adjacent viewpoint reference image is used as the motion information of the macro block being coded currently.

In the prior coding technologies, when the current image is coded in motion skip mode, the reference image of the video image at each viewpoint is decoded completely, and a new reference image needs to be created and stored in a decoded picture buffer (DPB). At the time of coding the current macro block, the image index of the newly created reference image is put in the reference queue, and the image index in the reference image queue is invoked. The newly created reference image indicated by the index is found in the DPB, and is used as the reference image of the image being coded currently. The coded streams are sent to the decoder. The decoder finds the newly created reference image indicated by the index in the DPB according to the image index in the reference queue, and decodes the current image.

In the process of implementing the present invention, the inventor finds at least the following problems in the prior art: The existence of the inter-view reference image depends on the view dependency between viewpoint images. When the image at the current viewpoint lacks inter-view reference images, no reference image is available for invoking in the reference image queue, and the multi-view video image coding is impossible for the current block of the video image in motion skip mode. When the image at the current viewpoint has an inter-view reference image, the reference image needs to be decoded completely, a new reference image needs to be created and stored in the DPB, and the image index of the new reference image needs to be put in the reference queue. If the coding is still based on the prior art, the existing correlation between viewpoint images needs to be changed inevitably, and the information about the inter-view reference images needs to be managed, which increases the complexity of coding and reducing efficiency and gain of coding the multi-view video images.

### SUMMARY OF THE INVENTION

A method for coding multi-view video images is provided in an embodiment of the present invention. The method comprises:
Another method for coding multi-view video images in an embodiment of the present invention comprises:
   A method for decoding multi-view video images in an embodiment of the present invention comprises:
An apparatus for coding multi-view video images in an embodiment of the present invention comprises:
   Another apparatus for coding multi-view video images in an embodiment of the present invention comprises:
An apparatus for decoding multi-view video images in an embodiment of the present invention comprises:
   It is evident from the foregoing technical solution that, in the process of coding the current macro block in motion skip mode, the inter-view motion dependencies of an image under coding are set, and therefore, the coding is simplified, and the efficiency in and the gain of coding the multi-view video image are improved.

### BRIEF DESCRIPTION OF THE DRAWINGS

FIG. 1 shows predictive coding in motion skip mode;
FIG. 2 shows a prediction model of a spatiotemporal hierarchical B-frame;
FIG. 3 shows a coding method in an embodiment of the present invention;
FIG. 4 shows another coding method in an embodiment of the present invention;
FIG. 5 shows a decoding method in an embodiment of the present invention;
FIG. 6 shows a coding apparatus in an embodiment of the present invention;
FIG. 7 shows another coding apparatus in an embodiment of the present invention; and
FIG. 8 shows a decoding apparatus in an embodiment of the present invention.

### DETAILED DESCRIPTION OF THE EMBODIMENTS

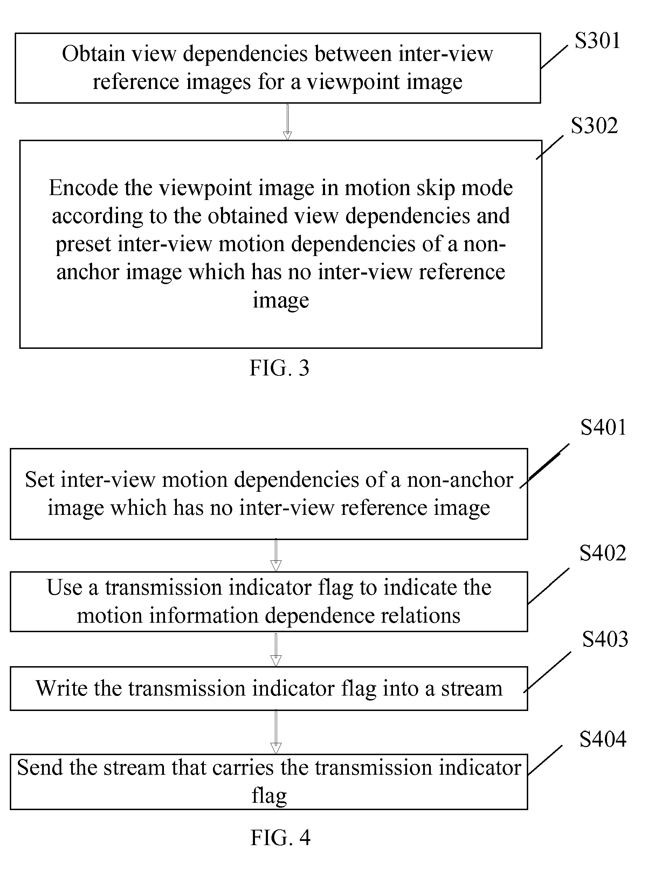

A method for coding multi-view video images is provided in an embodiment of the present invention. As shown in FIG. 3, the method comprises: S301: Obtain view dependencies between inter-view reference images for a viewpoint image; and S302: Encode the viewpoint image in motion skip mode according to the obtained view dependencies and preset inter-view motion dependencies of a non-anchor image which has no inter-view reference image.

Another method for coding multi-view video images is provided in an embodiment of the present invention. As shown in FIG. 4, the method comprises: S401: Set inter-view motion dependencies of a non-anchor image which has no inter-view reference image;
S402: Use a transmission indicator flag to indicate the motion dependencies;
S403: Write the transmission indicator flag into a stream; and
S404: Send the stream that carries the transmission indicator flag.

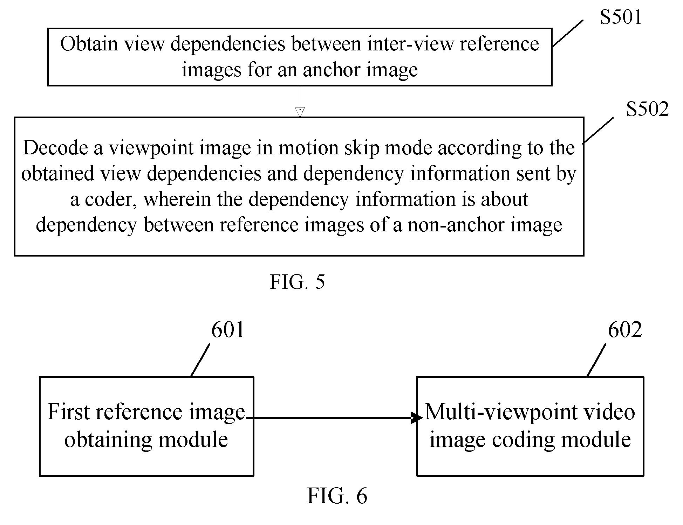

A method for decoding multi-view video images is provided in an embodiment of the present invention. As shown in FIG. 5, the method comprises:
S501: Obtain view dependencies between inter-view reference images for an anchor image; and
S502: Decode a viewpoint image in motion skip mode according to the obtained view dependencies and dependency information sent by a coder, wherein the dependency information is about a dependency between reference images for a non-anchor image.

The embodiments of the present invention overcome the problems of the prior art, simplify the coding, and improve the efficiency in and the gain of coding of multi-view video images.

A method for coding multi-view video images is provided in another embodiment of the present invention, including: obtaining a transmission indicator flag and view dependencies between inter-view reference images for a viewpoint image; and if the transmission indicator flag indicates use of view dependencies between inter-view reference images for an anchor image, coding the viewpoint image according to the obtained view dependencies between the inter-view reference images for the viewpoint image; if the transmission indicator flag does not indicate use of the view dependencies between inter-view reference images for an anchor image, coding the viewpoint image in motion skip mode according to preset inter-view motion dependencies of a non-anchor image which has no inter-view reference image.

A method for decoding multi-view video images is provided in another embodiment of the present invention, including: obtaining view dependencies between inter-view reference images for an anchor image and dependency information; and if the dependency information indicates use of view dependencies between inter-view reference images for an anchor image at the same viewpoint, decoding the viewpoint image according to the view dependencies between the inter-view reference images for the anchor image; if the dependency information does not indicate use of the view dependencies between inter-view reference images for an anchor image at the same viewpoint, decoding the viewpoint image in motion skip mode according to the dependency information sent by a coder, wherein the dependency information is about a view dependency between reference images of the non-anchor image.

The method embodiments of the present invention are elaborated below:
A method for coding multi-view video images is provided in the first embodiment of the present invention.

Before coding the multi-view video image, the coder needs to determine the view dependencies between the inter-view reference images for the anchor image and the non-anchor image at each viewpoint, and write such dependencies into a stream and send the stream to the decoder. For brevity of description, a spatiotemporal hierarchical B-frame prediction model (which is put forward by German Heinrich Hertz Institute (HHI)) is taken as an example for describing the view dependencies between reference images for the anchor image and the non-anchor image at each viewpoint in all embodiments of the present invention. As shown in FIG. 2, in this prediction model, S0, S1... are different viewpoint identifiers (view ID), and the coding sequence of the viewpoint identifiers is: S0 - S2 - S1 - S4 - S3 - S6 - S5 - S7. T0, T1... are different time points, and the coordinate points of (Sx, Tx) (x=0, 1, 2...) represent the coded images. The coded images at T0 and T8 are anchor images, and the coded images at other time points are non-anchor images. In a coordinate point, letters I, P or B mean that the coding mode of the image are respectively intra-frame prediction coding, or inter-frame prediction coding, or bidirectional prediction coding. The subscripts of the letters refer to the grade of the image in the hierarchical B-frame prediction structure. An arrow between the coded images indicates that the coded image located in the opposite direction of the arrow is a reference image of the coded image which the arrow points to. This prediction model makes full use of the temporal correlation between viewpoint images of a video at a viewpoint, and the spatial correlation between the viewpoint images at different viewpoints to perform predictive coding and obtain higher coding gain. The view dependencies between reference images for coded images of the multi-view video prediction model are shown in FIG. 2. For example, the view dependencies between the reference images for the images corresponding to viewpoint image identifiers S0, S 1 and S2 are as follows:

With respect to the identifier S0, the anchor images at time points T0 and T8 have no reference image; and the non-anchor images at other time points have only intra-view reference images. That is, the image which comes from the same viewpoint video as the image currently being coded serves as a reference image in the time point direction of this identifier.

With respect to the identifier S2, the anchor images at time points T0 and T8 have only one inter-view reference image, namely, the image which comes from a different viewpoint identifier S0; and the non-anchor images at other time points have only intra-view reference images.

With respect to the S1 identifier, the anchor images at time points T0 and T8 have one reference image which comes from the viewpoint image identifier S0 and one inter-view reference image which comes from the viewpoint image identifier S2; and the non-anchor images at other time points have inter-view reference images and intra-view reference images which come from the two identifiers (S0 and S2). In the foregoing prediction model, the anchor images have inter-view reference images, and the non-anchor images may have intra-view reference images, namely, reference images in time direction, and the non-anchor images may further have inter-view reference images. The detailed view dependencies between reference images need to be set according to the position of the cameras. The embodiments of the present invention do not restrict the prediction model of the multi-view video images, and the view dependencies may be reset as required.

As shown in FIG. 3, after the prediction model of the multi-view video image is determined, it is necessary to obtain the view dependencies between the inter-view reference images for the anchor images and the non-anchor images, and write the view dependencies between the inter-view reference images for the anchor images and the non-anchor images at each viewpoint into a coded stream and send the coded stream to the decoder, on which the video images at different viewpoints are decoded.

On the coder, before the coding of the multi-view video image begins, it is necessary to set inter-view motion dependencies of the non-anchor image which has no inter-view reference image in motion skip mode. Still taking the spatiotemporal hierarchical B-frame prediction model as an example, the inter-view motion dependencies of the non-anchor image which has no inter-view reference image are set to be the view dependencies between inter-view reference images for the anchor images at the same viewpoint. That means, a reference image of the image being coded currently may be the images in the viewpoints of the inter-view reference images for the anchor images, wherein the anchor images and the image being coded currently are at the same viewpoint. The reference image may be at the same time point as the image being coded currently, or at different time points as the image being coded currently. For example, as shown in FIG. 2, the inter-view motion dependencies of a non-anchor image (S2, T1) are determined to be the view dependencies between inter-view reference images for an anchor image (S2, T0) at the same viewpoint, namely, (S0, T1) or (S0, Tx).

At the time of coding the current image in the multi-view video images in motion skip mode, a global disparity vector (GDV) is obtained according to the anchor image at the current viewpoint. The macro block corresponding to the current macro block is found in the inter-view reference images for the non-anchor image at the current viewpoint by using the obtained GDV. In this case, if the current non-anchor image which is coded has no inter-view reference image, the view dependencies between the inter-view reference images for the anchor images at the same viewpoint can be obtained according to the set motion dependencies of the non-anchor image, the macro block corresponding to the current macro block in the the inter-view reference images for the anchor image is found, and the motion information of the found corresponding macro block in the motion information buffer is found. The motion information buffer stores the motion information of the reference image macro blocks obtained through complete decoding or incomplete decoding. The motion information of the found corresponding macro block in the reference images is obtained as the motion information of the current macro block to decode the current image. If the current non-anchor image which is coded has an inter-view reference image, the motion information of the corresponding macro block of the inter-view reference image of the non-anchor image is invoked from the motion information buffer, and used as the motion information of the macro block being coded currently.

The motion information of the current image obtained after coding may be stored in the motion information buffer, and used as reference information for subsequent image coding.

The coder not only sends the set view dependencies between inter-view reference images for the multi-view video images to the decoder, but also uses a transmission indicator flag in the coded stream to indicate the set inter-view motion dependencies of the non-anchor image which has no inter-view reference image, as shown in FIG. 4. For example, the flag is "Ms_non_anchor_dep_indicator_flag", which is added in the coded stream to be sent to the decoder, and is set to "1", indicating that the motion dependencies of the non-anchor image are the view dependencies between the inter-view reference images for the anchor image, or the view dependencies between the inter-view reference images for the non-anchor image. The syntax may be:

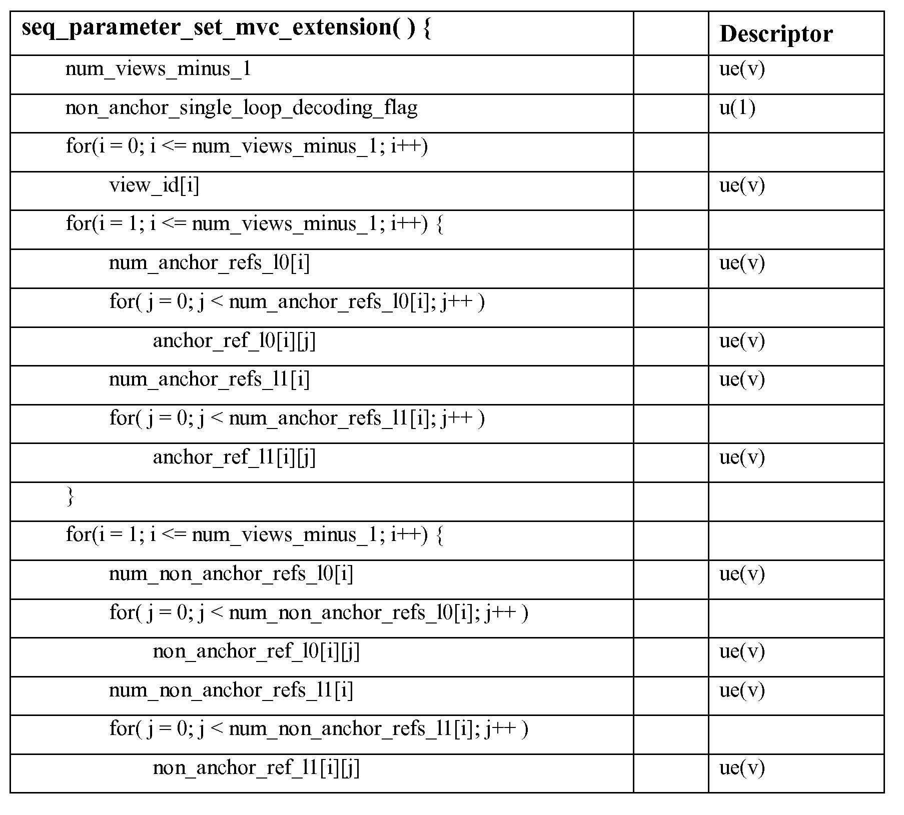

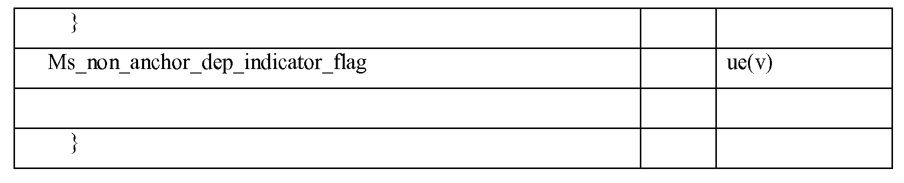

In the coded stream sent to the decoder, a transmission indicator flag indicates the set motion dependencies of the non-anchor image which has no inter-view reference image, or a flag "Sign" is added in the stream and set to "1", indicating that the inter-view motion dependencies of the non-anchor image which has no inter-view reference image are the view dependencies between inter-view reference images for the anchor image. Conversely, if Sign is 0, the view dependencies between the inter-view reference images for the non-anchor image apply.

In the first embodiment, the inter-view reference images do not need to be decoded completely before they are put in the reference queue, and their motion information is still readable. Therefore, when coding the current macro block, the motion information of the corresponding adjacent viewpoint image in the motion information buffer can be read, without the need of decoding the adjacent viewpoint image completely, putting it into the DPB and putting the image index of the adjacent viewpoint image in the DPB in the reference image queue as an inter-view reference image of the image being coded currently. Therefore, the motion skip mode can be fully utilized, without changing the existing prediction structure or reference image queue.

A method for decoding multi-view video images is provided in the second embodiment of the present invention.

The decoder receives streams sent from the coder. The streams include the view dependencies between inter-view reference images for the anchor image and the non-anchor image at each viewpoint.

After receiving the view dependencies between the viewpoint images, the decoder decodes the current image of the multi-view video images in motion skip mode, as shown in FIG. 5.

The decoder obtains a GDV according to the anchor image at the current viewpoint, finds the macro block corresponding to the current macro block in the inter-view reference images for the non-anchor image at the current viewpoint by using the obtained GDV. If the decoder fails to obtain the inter-view reference image of the current non-anchor image which is decoded, the decoder finds the macro block corresponding to the current macro block in the inter-view reference images for the anchor image at the same viewpoint, and obtains the motion information of the corresponding macro block and uses it as the motion information of the macro block being coded currently. In this case, the decoder obtains the motion information of the corresponding macro block by searching the motion information buffer. The motion information buffer stores the motion information of the reference image macro block obtained through complete decoding or incomplete decoding. The obtained motion information of the corresponding macro block in the reference images is used as the motion information of the current macro block for coding the current image. If the current non-anchor image which is decoded has an inter-view reference image, the motion information of the corresponding macro block of the inter-view reference image of the non-anchor image is invoked from the motion information buffer, and used as the motion information of the macro block being coded currently.

The motion information of the current image obtained after decoding may be stored in the motion information buffer, and used as reference information for subsequent image decoding.

Further, the decoder receives the streams sent from the coder. If the streams include a transmission indicator flag and the view dependencies between inter-view reference images for the anchor image and the non-anchor image at each viewpoint, the decoder decodes the transmission indicator flag. The transmission indicator flag indicates the set motion dependencies of the non-anchor image which has no inter-view reference image. The decoded transmission indicator flag corresponds to the setting on the coder. If the "Ms_non_anchor_dep_indicator_ flag" in the table is decoded as 1, it indicates that the inter-view motion dependencies of the non-anchor image are the view dependencies between the inter-view reference images for the anchor image at the same viewpoint; if the "Ms_non_anchor_dep_indicator_flag" is 0, it indicates that the currently decoded non-anchor image employs its own view dependencies between the inter-view reference images. Likewise, depending on the setting on the coder, if the transmission indicator flag "Sign" is decoded as 1, it indicates that the inter-view motion dependencies of the non-anchor image which has no inter-view reference image are the view dependencies between the inter-view reference images for the anchor image at the same viewpoint. Conversely, if the Sign is 0, each coded image has its own view dependencies between the inter-view reference images.

If the streams include a transmission indicator flag and the view dependencies between inter-view reference images for the anchor image and the non-anchor image at each viewpoint, the decoder decodes the current image of the multi-view video images in motion skip mode. The decoder obtains a GDV according to the anchor image at the current viewpoint, and finds the macro block corresponding to the current macro block in the inter-view reference images for the non-anchor image at the current viewpoint by using the obtained GDV. In this case, the decoder checks the transmission indicator flag. If the transmission indicator flag is 1, it indicates that the view dependencies between inter-view reference images for the anchor image at the same viewpoint apply. Therefore, in view of the view dependencies between the inter-view reference images for the anchor image at the same viewpoint of the currently decoded non-anchor image, the decoder finds the macro block corresponding to the current macro block in the reference images under such dependencies, and obtains the motion information of the corresponding macro block and uses it as the motion information of the currently coded macro block. In this case, the decoder obtains the motion information of the corresponding macro block by searching the motion information buffer. The motion information buffer stores the motion information of the reference image macro block obtained through complete decoding or incomplete decoding. The obtained motion information of the corresponding macro block in the reference images is used as the motion information of the current macro block for coding the current image. If the transmission indicator flag is 0, it indicates that the non-anchor image has an inter-view reference image, and the decoder invokes the motion information of the corresponding macro block of the inter-view reference image of the non-anchor image from the motion information buffer directly, and uses it as the motion information of the macro block being coded currently.

In embodiment two, the inter-view reference images do not need to be decoded completely before they are put in the reference queue, and their motion information is still readable. Therefore, when decoding the current macro block, the motion information of the corresponding adjacent viewpoint image in the motion information buffer can be read, without the need of decoding the adjacent viewpoint image completely, putting it into the DPB and putting the image index of the adjacent viewpoint image in the DPB in the reference image queue as an inter-view reference image of the image being coded currently. Therefore, the motion skip mode can be fully utilized, without changing the existing prediction structure or reference image queue.

A method for coding multi-view video images is provided in the third embodiment of the present invention.

Before coding the multi-view video image, the coder needs to determine the view dependencies between the inter-view reference images for at least the anchor image at each viewpoint, and write such dependencies into a stream; and may also write the view dependencies between the inter-view reference images for the non-anchor image into the stream, and send the stream to the decoder. Still taking the spatiotemporal hierarchical B-frame prediction model as an example, the anchor images have inter-view reference images, and the non-anchor images may have intra-view reference images, namely, reference images in time direction, and may further have inter-view reference images. The detailed view dependencies between reference images need to be set according to the location of the cameras. The embodiments of the present invention do not restrict the prediction model of the multi-view video images, and the view dependencies may be reset as required.

After the prediction model of the multi-view video image is determined, it is necessary to obtain the view dependencies between the inter-view reference images for at least the anchor image, and write the view dependencies between the inter-view reference images for at least the anchor image at each viewpoint into a coded stream and send the coded stream to the decoder, on which the video images at different viewpoints are decoded.

On the coder, before the coding of the multi-view video image begins, it is necessary to set inter-view motion dependencies of the non-anchor image in motion skip mode. As shown in FIG. 3, in this embodiment, the motion dependencies may be defined as the motion dependencies of a group of inter-view reference images by users. The motion dependencies of the inter-view reference images are written into a stream, which is sent to the decoder. Alternatively, a transmission indicator flag (namely, dependency flag) is added in the stream to indicate that the inter-view motion dependencies of the non-anchor image are the preset motion dependencies of a group of inter-view reference images. The syntax of the stream is as follows:

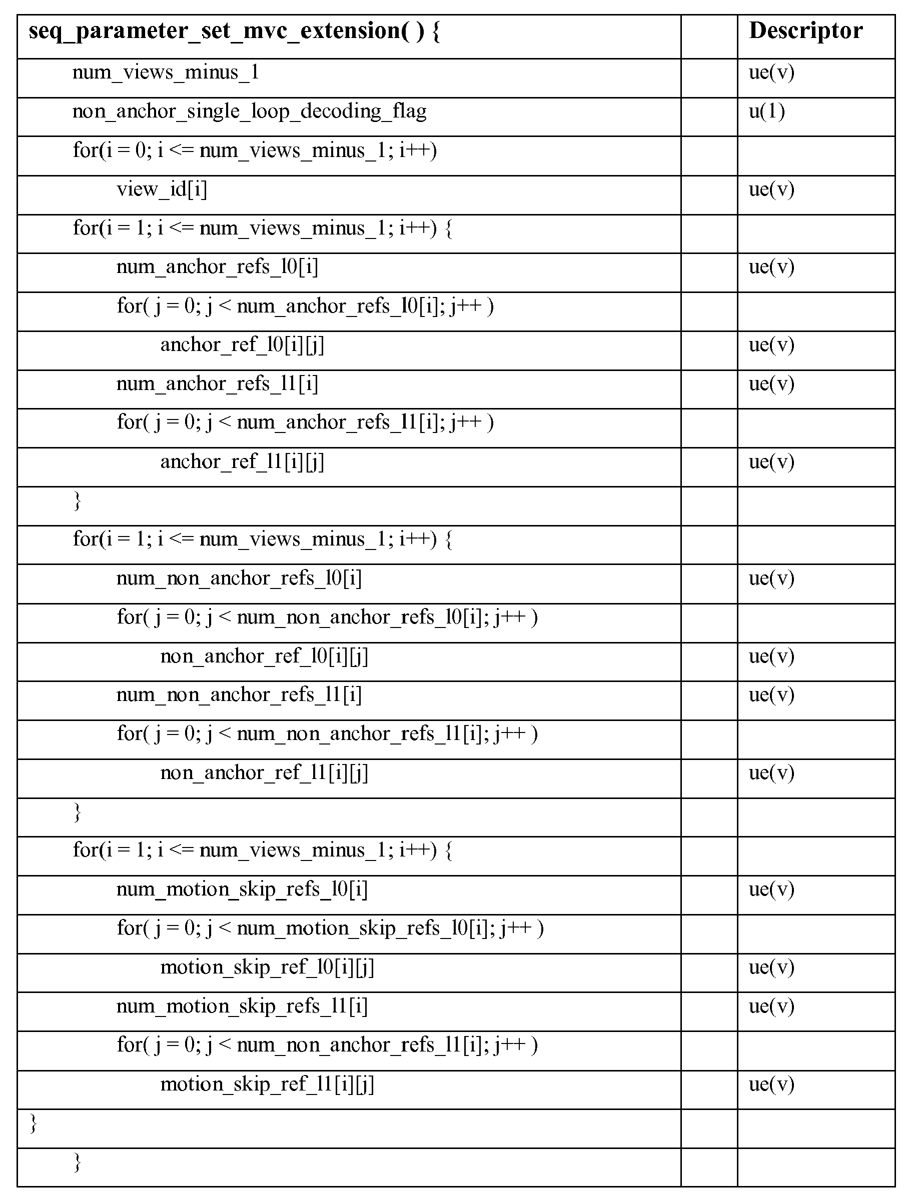

At the time of coding the current image in the multi-view video images in motion skip mode, a GDV is obtained according to the anchor image at the current viewpoint, and the motion information of the macro block corresponding to the current macro block is found in the motion information buffer of the inter-view reference images for the non-anchor image at the current viewpoint by using the obtained GDV. In this case, if the image being processed currently is a non-anchor image, the coder searches for the motion information of the reference images according to the motion dependencies of the inter-view reference images. The motion information of the reference images is stored in the motion information buffer. The motion information buffer stores the motion information of the reference image macro block obtained through complete decoding or incomplete decoding. The obtained motion information of the corresponding macro block in the reference images is used as the motion information of the current macro block for coding the current image.

After the coding, the motion information of the current coded image may be stored in the motion information buffer, and used as reference information for subsequent image coding.

A method for decoding multi-view video images is provided in the fourth embodiment of the present invention.

The decoder receives the stream sent by the coder. The stream carries the view dependencies between inter-view reference images for at least the anchor image at each viewpoint; and may further carry the view dependencies between the inter-view reference images for the non-anchor image, and the motion dependencies of a group of user-defined inter-view reference images for the non-anchor image.

A GDV is obtained according to the anchor image at the current viewpoint, and the macro block corresponding to the current macro block is found in the inter-view reference images for the non-anchor image at the current viewpoint by using the obtained GDV. In this case, if the image being processed currently is a non-anchor image, the coder searches for the motion information of the reference images according to the motion dependencies of the user-defined inter-view reference images. The motion information of the inter-view reference images is stored in the motion information buffer. The motion information buffer stores the motion information of the reference image macro block obtained through complete decoding or incomplete decoding. The obtained motion information of the corresponding macro block in the reference images is used as the motion information of the current macro block for decoding the current image, as shown in FIG. 5.

The motion information of the current image obtained after decoding may be stored in the motion information buffer, and used as reference information for subsequent image decoding.

If the stream sent from the coder carries a transmission indicator flag, according to the transmission indicator flag, the motion dependencies of the user-defined inter-view reference images for the non-anchor image are used as the inter-view dependencies of the non-anchor image for decoding the current image.

An apparatus for coding multi-view video images is provided in an embodiment of the present invention. As shown in FIG. 6, the apparatus comprises: a first reference image obtaining module 601, adapted to obtain view dependencies between inter-view reference images for a viewpoint image; and a multi-view video image coding module 602, adapted to encode the viewpoint image in motion skip mode according to the obtained dependencies and preset inter-view motion dependencies of a non-anchor image which has no inter-view reference image.

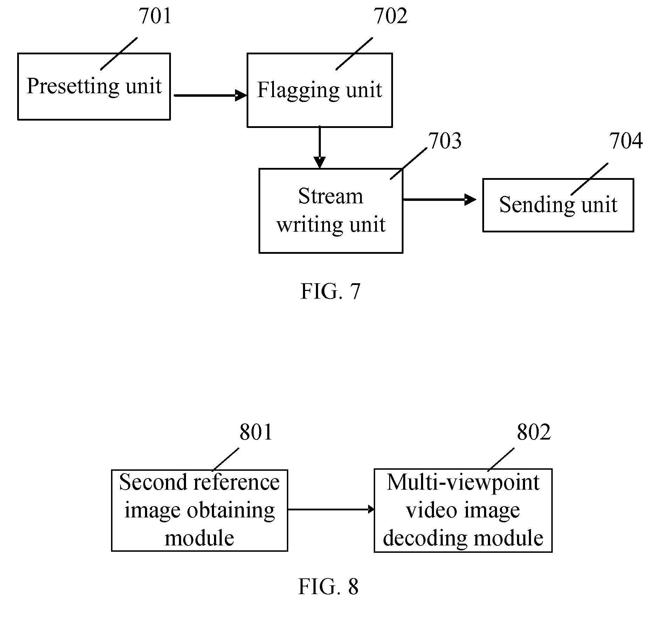

Another apparatus for coding multi-view video images is provided in an embodiment of the present invention. As shown in FIG. 7, the apparatus comprises: a presetting unit 701, adapted to set inter-view motion dependencies of a non-anchor image which has no inter-view reference image; an identifying unit 702, adapted to use a transmission indicator flag to indicate the motion dependencies; a stream writing unit 703, adapted to write the transmission indicator flag into a stream; and a sending unit 704, adapted to send the stream that carries the transmission indicator flag.

An apparatus for decoding multi-view video images is provided in an embodiment of the present invention. As shown in FIG. 8, the apparatus comprises: a second reference image obtaining module 801, adapted to obtain view dependencies between inter-view reference images for an anchor image; and a multi-view video image decoding module 802, adapted to decode a viewpoint image in motion skip mode according to the obtained dependencies and dependency information sent by a coder, wherein the dependency information is about view dependency between reference images for a non-anchor image.

The apparatus embodiments above overcome the problems of the prior art, simplify the coding, and improve the efficiency in and the gain of coding of multi-view video images.

The apparatus embodiments of the present invention are elaborated below:
An apparatus for coding multi-view video images is provided in the fifth embodiment of the present invention.
The coding apparatus comprises a first reference image obtaining module, which is adapted to obtain view dependencies between inter-view reference images for a viewpoint image.

The first reference image obtaining module comprises a first stream writing unit and a first dependency setting unit.

The first dependency setting unit sets the inter-view motion dependencies of a non-anchor image which has no inter-view reference image. Taking the spatiotemporal hierarchical B-frame prediction model as an example, the inter-view motion dependencies of the non-anchor image may be set to be the view dependencies between the inter-view reference images for the anchor image at the same viewpoint.

The first stream writing unit writes the view dependencies between inter-view reference images for the image which has inter-view reference images into a coded stream.

The coding apparatus further comprises a first multi-view video image coding module, which encodes the current image of the multi-view video images in motion skip mode.

The first multi-view video image coding module comprises a first motion mode coding unit, a first judging unit, and a first motion information retrieving unit.

The first motion mode coding unit obtains a GDV according to the anchor image at the current viewpoint in motion skip mode, and finds the macro block corresponding to the current macro block in the reference images of the inter-view reference images for the non-anchor image at the current viewpoint by using the obtained GDV. The first judging unit checks the inter-view reference images for the coded image to judge whether the non-anchor image has any inter-view reference image. If the non-anchor image has no inter-view reference image, the first motion mode coding unit applies the macro block corresponding to the current macro block in the inter-view reference images for the anchor image at the same viewpoint according to the setting result of the first dependency setting unit.

The coding apparatus further comprises a first motion information buffer, which stores the motion information of the reference image macro block obtained through complete decoding or incomplete decoding. The first motion information retrieving unit obtains the motion information of the macro block from the first motion information buffer according to the macro block, and uses it as the motion information of the current coded macro block. If the current non-anchor image which is coded has an inter-view reference image, the first motion information retrieving unit invokes the motion information of the corresponding macro block of the inter-view reference image of the non-anchor image from the first motion information buffer. The first motion information retrieving unit uses the motion information of the reference image as the motion information of the current coded macro block.

The motion information of the current image obtained after coding may be stored in the first motion information buffer, and used as reference information for subsequent image coding.

The coding apparatus further comprises a first sending module, which sends the coded stream of the first stream writing unit to the decoder. The coded stream carries the view dependencies between inter-view reference images for the image which has inter-view reference images.

Further, the first stream writing unit writes the dependencies set by the first dependency setting unit and the view dependencies between inter-view reference images for the viewpoint image which has the inter-view reference images into the stream.

When writing the view dependencies between inter-view reference images for the anchor image and the non-anchor image which have inter-view reference images into the stream, the first stream writing unit uses a transmission indicator flag to indicate the motion dependencies of the non-anchor image which has no inter-view reference image, and writes the transmission indicator flag into the stream.

The transmission indicator flag in the stream on the coder side indicates the set motion dependencies of the anchor image which has no inter-view reference image. More specifically, a transmission indicator flag "Ms_non_anchor_ dep_indicator_flag" is added into the stream, and set to 1, indicating that the motion dependencies between inter-view reference images for the non-anchor image which has no inter-view reference image are the view dependencies between the inter-view reference images for the anchor image at the same viewpoint. Otherwise, if the non-anchor image has any inter-view reference images, the view dependencies between the inter-view reference images for the non-anchor image apply.

In the coded stream sent to the decoder, the transmission indicator flag may also indicate the set view dependencies of the anchor image which has no inter-view reference image in this way: A flag "Sign" is added in the stream and set to "1", indicating that the inter-view motion dependencies of the non-anchor image which has no inter-view reference image are the view dependencies between inter-view reference images for the anchor image at the same viewpoint. Conversely, if Sign is 0, the view dependencies between the inter-view reference images for the non-anchor image apply.

An apparatus for decoding multi-view video images is provided in embodiment six of the present invention.

The decoding apparatus comprises a second receiving module, which is adapted to receive coded streams, and read the view dependencies between inter-view reference images for the anchor image and the non-anchor image at each viewpoint in the stream.

The decoding apparatus further comprises a second multi-view video image decoding module, which decodes the current image of the multi-view video images in motion skip mode.

The second multi-view video image decoding module comprises a second motion mode decoding unit, a second judging unit, and a second motion information retrieving unit.

The second motion mode coding unit obtains a GDV according to the anchor image at the current viewpoint in motion skip mode, finds the macro block corresponding to the current macro block in the reference images of the inter-view reference images for the non-anchor image at the current viewpoint by using the obtained GDV. The second judging unit checks the inter-view reference images for the non-anchor image to judge whether the non-anchor image has any inter-view reference image. If the non-anchor image has no inter-view reference image, the second motion mode coding unit applies the macro block corresponding to the current macro block in the inter-view reference images for the anchor image at the same viewpoint.

The decoding apparatus further comprises a second motion information buffer, which stores the motion information of the reference image macro block obtained through complete decoding or incomplete decoding. The second motion information retrieving unit obtains the motion information of each macro block from the second motion information buffer according to the macro block. The second motion mode coding unit uses the motion information of the corresponding macro block, which is obtained from the second motion information buffer, as the motion information of the current coded macro block. If the current non-anchor image which is coded has an inter-view reference image, the second motion information retrieving unit invokes the motion information of the corresponding macro block of the inter-view reference image of the non-anchor image from the second motion information buffer. The second motion information retrieving unit uses the motion information of the reference image as the motion information of the current decoded macro block.

The motion information of the current image obtained after decoding may be stored in the second motion information buffer, and used as reference information for subsequent image decoding.

Further, the second receiving module in the decoding apparatus is adapted to receive coded streams, and read the transmission indicator flag and the view dependencies between inter-view reference images for the anchor image and the non-anchor image at each viewpoint in the stream. The transmission indicator flag indicates the set motion dependencies of the non-anchor image which has no inter-view reference image.

The second motion mode coding unit obtains a GDV according to the anchor image at the current viewpoint in motion skip mode, and finds the macro block corresponding to the current macro block in the reference images of the inter-view reference images for the non-anchor image at the current viewpoint by using the obtained GDV. The second judging unit judges the transmission indicator flag. For example, when the transmission indicator flag is "1", it indicates that the motion dependencies between inter-view reference images for the non-anchor image which has no inter-view reference image are the view dependencies between inter-view reference images for the anchor image at the same viewpoint. The second motion mode coding unit applies the macro block corresponding to the current macro block in the inter-view reference images for the anchor image at the same viewpoint. The second motion information retrieving unit obtains the motion information of the corresponding macro block from the second motion information buffer according to the macro block. The second motion mode coding unit uses the motion information of the corresponding macro block, which is obtained from the second motion information buffer, as the motion information of the current decoded macro block. If the transmission indicator flag is "0", the second motion information retrieving unit invokes the motion information of the corresponding macro block of the inter-view reference images for the non-anchor image from the second motion information buffer. The second motion information retrieving unit uses the motion information of the reference image as the motion information of the current decoded macro block.

An apparatus for coding multi-view video images is provided in the seventh embodiment of the present invention.

The coding apparatus comprises a third reference image obtaining module, which is adapted to set view dependencies between inter-view reference images for a viewpoint image.

The third reference image obtaining module comprises a third stream writing unit and a third dependency setting unit.

The third dependency setting unit sets the inter-view motion dependencies of the non-anchor image. Taking the spatiotemporal hierarchical B-frame prediction model as an example, the motion dependencies of the non-anchor image may be preset to be the motion dependencies in a group of user-defined inter-view reference images.

The third stream writing unit writes the dependencies set by the third dependency setting unit and the view dependencies between inter-view reference images for at least the anchor image into the stream. The writing of the dependencies set by the third dependency setting unit into the stream may be: writing the motion dependencies in a group of user-defined inter-view reference images into the stream. The third stream writing unit may also add a transmission indicator flag, namely, a dependency flag, into the stream. The flag indicates that the inter-view motion dependencies of the non-anchor image are the motion dependencies in a group of user-defined inter-view reference images.

The coding apparatus further comprises a third multi-view video image coding module, which encodes the current image of the multi-view video images in motion skip mode.

The third multi-view video image coding module comprises a third motion mode coding unit, a third judging unit, and a third motion information retrieving unit.

The third motion mode coding unit obtains a GDV according to the anchor image at the current viewpoint in motion skip mode, and finds the macro block corresponding to the current macro block in the reference images of the inter-view reference images for the non-anchor image at the current viewpoint by using the obtained GDV. The third judging unit judges whether the current image is a non-anchor image. If it is determined that the current image is a non-anchor image, the motion mode coding unit searches for the motion dependencies between the user-defined inter-view reference images according to the set motion dependencies of the non-anchor image, and finds the macro block corresponding to the current macro block in the reference images under such dependencies.

The coding apparatus further comprises a third motion information buffer, which stores the motion information of the reference image macro block. The third motion information retrieving unit obtains the motion information of the corresponding macro block from the third motion information buffer according to the macro block. The third motion mode coding unit uses the motion information of the corresponding macro block, which is obtained from the third motion information buffer, as the motion information of the current coded macro block.

The motion information of the current image obtained after coding may be stored in the third motion information buffer, and used as reference information for subsequent image coding. The coding apparatus further comprises a third sending module, which sends the coded stream of the third stream writing unit to the decoder. The coded stream carries the view dependencies between inter-view reference images for at least the anchor image, and carries the preset motion dependencies in a group of user-defined inter-view reference images for the non-anchor image.

An apparatus for decoding multi-view video images is provided in the eighth embodiment of the present invention.

The decoding apparatus comprises a fourth receiving module, which is adapted to receive coded streams, and obtain the view dependencies between inter-view reference images for the viewpoint image at each viewpoint in the stream.

After receiving the code stream, the fourth receiving module reads and identifies the view dependencies between inter-view reference images for the viewpoint image at each viewpoint in the stream, including the view dependencies between the inter-view reference images for at least the anchor image and the preset motion dependencies in a group of user-defined inter-view reference images for the non-anchor image.

The decoding apparatus further comprises a fourth multi-view video image decoding module, which decodes the current image of the multi-view video images in motion skip mode.

The fourth multi-view video image decoding module comprises a fourth motion mode decoding unit, a fourth judging unit, and a fourth motion information retrieving unit.

The fourth motion mode decoding unit obtains a GDV according to the anchor image at the current viewpoint in motion skip mode, and finds the macro block corresponding to the current macro block in the reference images of the inter-view reference images for the non-anchor image at the current viewpoint by using the obtained GDV. The fourth judging unit judges whether the current decoded image is a non-anchor image. If it is determined that the current decoded image is a non-anchor image, the fourth motion mode coding unit searches for the preset motion dependencies between the user-defined inter-view reference images according to the set motion dependencies of the non-anchor image, and finds the macro block corresponding to the current macro block in the reference images under such dependencies.

The decoding apparatus further comprises a fourth motion information buffer, which stores the motion information of the reference image macro block obtained through complete decoding or incomplete decoding. The fourth motion information retrieving unit obtains the motion information of the corresponding macro block from the fourth motion information buffer according to the macro block. The fourth motion mode coding unit uses the motion information of the corresponding macro block, which is obtained from the fourth motion information buffer, as the motion information of the current coded macro block.

The motion information of the current image obtained after decoding may be stored in the motion information buffer, and used as reference information for subsequent image decoding.

If the stream sent from the coder carries a transmission indicator flag, according to the transmission indicator flag, the fourth judging unit determines that the motion dependencies between the user-defined inter-view reference images for the non-anchor image are used as the inter-view dependencies of the non-anchor image for decoding the current image.

It is evident from the foregoing description that, through the technical solution under the present invention, in the process of coding the current macro block in motion skip mode, the inter-view motion dependencies of an image under coding are set, and therefore, the coding is simplified, and the efficiency in and the gain of coding the multi-view video image are improved.

## Claims

1. A method for coding multi-view video images, comprising:
obtaining a view dependency between inter-view reference images for a viewpoint image; and
encoding the viewpoint image in motion skip mode according to the view dependency and a first inter-view motion dependency of a first non-anchor image, wherein the first non-anchor image has no inter-view reference image.

2. The method according to claim 1, wherein:
the first inter-view motion dependency is preset to be a view dependency between inter-view reference images for an anchor image, wherein the anchor image is at the same viewpoint with the non-anchor image.

3. The method according to claim 1, further comprising:
presetting a second inter-view motion dependency of a second non-anchor image, wherein the second non-anchor image has an inter-view reference image; and
encoding the viewpoint image according to the view dependency and the second inter-view motion dependency.

4. The method according to claim 3, wherein:
the second inter-view motion dependency is preset to be a user-defined inter-view motion dependency.

5. The method according to claim 2 or 4, further comprising:
writing a transmission indicator flag into a stream and sending the stream to a decoder, wherein the transmission indicator flag indicates the first inter-view motion dependency or the second inter-view motion dependency.

6. The method according to claim 1, wherein: after encoding the viewpoint image, the method further comprises:
writing a coded result of the viewpoint image into a coded stream and sending the stream to a decoder.

7. The method according to claim 1, wherein: encoding the viewpoint image in the motion skip mode comprises:
obtaining motion information of a reference image of the viewpoint image from a motion information buffer according to the view dependency and the first inter-view motion dependency; and
performing coding according to the motion information of the reference image to obtain motion information of the viewpoint image.

8. A method for coding multi-view video images, comprising:
setting motion dependencies between inter-view reference images of an unanchored image which has no inter-view reference image;
using a transmission indicator flag to indicate the motion dependencies;
writing the transmission indicator flag into a stream; and
sending the stream that carries the transmission indicator flag.

9. The method according to claim 8, wherein:
the motion dependencies between the inter-view reference images of the unanchored image which has no inter-view reference image are set to be dependencies between inter-view reference images of an anchored image at the same viewpoint.

10. A method for decoding multi-view video images, comprising:
obtaining a view dependency between inter-view reference images for an anchor image; and
decoding a viewpoint image in motion skip mode according to the view dependency and dependency information sent by a coder, wherein the dependency information is about a view dependency between reference images for a non-anchor image.

11. The method according to claim 10, wherein:
the dependency information sent by the coder comprises information of a view dependency between inter-view reference images for a non-anchor image which has an inter-view reference image.

12. The method according to claim 11, wherein: decoding the viewpoint image in the motion skip mode comprises:
if the viewpoint image is a non-anchor image which has no inter-view reference image, using the view dependency between the inter-view reference images for the anchor image at the same viewpoint as the inter-view motion dependency of the non-anchor image which has no inter-view reference image to decode the non-anchor image.

13. The method according to claim 11, further comprising:
receiving a transmission indicator flag sent from the coder, wherein the transmission indicator flag indicates that the inter-view motion dependency of the non-anchor image which has no inter-view reference image is the view dependency between the inter-view reference images for the anchor image at the same viewpoint; and
decoding the non-anchor image which has no inter-view reference image by using the view dependency between the inter-view reference images for the anchor image at the same viewpoint according to the transmission indictor flag.

14. The method according to claim 10, wherein:
the dependency information sent from the coder is a transmission indicator flag, and the transmission indicator flag indicates that the inter-view motion dependency of the non-anchor image is a user-defined inter-view motion dependency.

15. The method according to claim 14, wherein: decoding the viewpoint image in the motion skip mode comprises:
decoding the non-anchor image by using the user-defined inter-view motion dependency according to the transmission indicator flag.

16. The method according to claim 10, wherein: decoding the viewpoint image in the motion skip mode comprises:
obtaining motion information of a reference image of the viewpoint image from a motion information buffer according to the view dependency between the inter-view reference images for the anchor image and the dependency information sent by the coder; and
performing decoding according to the motion information of the reference image to obtain motion information of the viewpoint image.

17. An apparatus for coding multi-view video images, comprising:
a first reference image obtaining module, adapted to obtain dependencies between inter-view reference images for a viewpoint image; and
a multi-view video image coding module, adapted to encode the viewpoint image in motion skip mode according to the obtained dependencies and preset motion dependencies, wherein the motion dependencies exist between inter-view reference images for a non-anchor image which has no inter-view reference image.

18. The apparatus according to claim 17, further comprising:
a presetting unit, adapted to set the motion dependencies between the inter-view reference images for the non-anchor image which has no inter-view reference image to be dependencies between inter-view reference images for an anchor image at the same viewpoint.

19. The apparatus according to claim 18, further comprising:
an identifying unit, adapted to set a transmission indicator flag and writes it into a stream, wherein the transmission indicator flag is an indication of using the dependencies between the inter-view reference images for the anchor image at the same viewpoint as the motion dependencies between the inter-view reference images for the non-anchor image which has no inter-view reference image; and
a sending unit, adapted to send the stream to a decoding apparatus.

20. An apparatus for coding multi-view video images, comprising:
a presetting unit, adapted to set motion dependencies between inter-view reference images for a non-anchor image which has no inter-view reference image;
an identifying unit, adapted to use a transmission indicator flag to indicate the motion dependencies;
a stream writing unit, adapted to write the transmission indicator flag into a stream; and
a sending unit, adapted to send the stream that carries the transmission indicator flag.

21. An apparatus for decoding multi-view video images, comprising:
a first reference image obtaining module, adapted to obtain dependencies between inter-view reference images for an anchor image; and
a multi-view video image decoding module, adapted to decode a viewpoint image in motion skip mode according to the obtained dependencies and dependency information sent by a coder, wherein the dependency information is about dependency between reference images of a non-anchor image.

22. The apparatus according to claim 21, wherein the multi-view video image decoding module comprises:
a judging unit, adapted to: judge the dependency information sent from the coder, wherein the dependency information is about the dependency between the reference images of the non-anchor image and is a transmission indicator flag; and, according to the transmission indicator flag, determine that the motion dependencies between the inter-view reference images for the non-anchor image which has no inter-view reference image are the dependencies between the inter-view reference images for the anchor image at the same viewpoint;
a buffering unit, adapted to store motion information of reference images dependent of each other;
a motion information retrieving unit, adapted to retrieve the motion information of the reference images of a current image from the motion information buffer according to the dependencies between the inter-view reference images for the anchor image at the same viewpoint; and
a motion mode decoding unit, adapted to decode the current image in motion skip mode according to the motion information retrieved by the motion information retrieving unit.

23. A method for coding multi-view video images, comprising:
obtaining a transmission indicator flag and dependencies between inter-view reference images for a viewpoint image; and
if the transmission indicator flag indicates use of dependencies between inter-view reference images for an anchor image, coding the viewpoint image according to the obtained dependencies between the inter-view reference images for the viewpoint image;
if the transmission indicator flag does not indicate use of dependencies between inter-view reference images for an anchor image, coding the viewpoint image in motion skip mode according to preset inter-view motion dependencies of a non-anchor image which has no inter-view reference image.

24. The method according to claim 23, wherein:
the inter-view motion dependencies of the non-anchor image which has no inter-view reference image are preset to be the view dependencies between inter-view reference images for the anchor image at the same viewpoint.

25. The method according to claim 23, further comprising:
presetting inter-view motion dependencies of non-anchor images which have any inter-view reference images; and
if the transmission indicator flag indicates use of the view dependencies between the inter-view reference images for the viewpoint image itself, coding the viewpoint image according to the obtained dependencies between the inter-view reference images for the viewpoint image and the preset inter-view motion dependency of the non-anchor image.

26. The method according to claim 25, wherein:
the inter-view motion dependencies of the non-anchor image are preset to be user-defined inter-view motion dependencies.

27. The method according to claim 24 or 26, further comprising:
writing the transmission indicator flag into a stream and sending the stream to a decoder, wherein the transmission indicator flag indicates the preset inter-view motion dependencies of the non-anchor image.

28. The method according to claim 23, wherein: after encoding a current viewpoint image, the method further comprises:
sending a coded result into a coded stream and sending the stream to a decoder.

29. The method according to claim 23, wherein: decoding the viewpoint image in motion skip mode comprises:
obtaining motion information of reference images of a current image from a motion information buffer according to the dependencies between the inter-view reference images for the viewpoint image and the preset motion dependencies, wherein the motion dependencies exist between the inter-view reference images for the non-anchor image which has no inter-view reference image; and
performing coding according to the motion information of the reference images to obtain the motion information of the current image.

30. A method for decoding multi-view video images, comprising:
obtaining view dependencies between inter-view reference images for an anchor image and dependency information; and
if the dependency information indicates use of the view dependencies between inter-view reference images for an anchor image at the same viewpoint, decoding the viewpoint image according to the view dependencies between the inter-view reference images for the anchor image;
if the dependency information does not indicate use of the view dependencies between inter-view reference images for an anchor image at the same viewpoint, decoding the viewpoint image in motion skip mode according to the dependency information sent by a coder, wherein the dependency information is about a view dependency between reference images of the non-anchor image.

31. The method according to claim 30, wherein:
the dependency information sent by the coder comprises dependencies between inter-view reference images for the non-anchor image which has any inter-view reference images.

32. The method according to claim 31, wherein: decoding the viewpoint image in motion skip mode comprises:
if the image being decoded currently is the non-anchor image which has no inter-view reference image, using the dependencies between the inter-view reference images for the anchor image at the same viewpoint as the motion dependencies between the inter-view reference images for the non-anchor image which has no inter-view reference image to decode the non-anchor image.

33. The method according to claim 31, further comprising:
receiving a transmission indicator flag sent from the coder, wherein the transmission indicator flag indicates that the motion dependencies between the inter-view reference images for the non-anchor image which has no inter-view reference image are the dependencies between the inter-view reference images for the anchor image at the same viewpoint; and
decoding the non-anchor image which has no inter-view reference image by using the dependencies between the inter-view reference images for the anchor image at the same viewpoint according to the transmission indictor flag.

34. The method according to claim 30, wherein:
the dependency information sent from the coder is a transmission indicator flag, and the transmission indicator flag indicates that the motion dependencies between the inter-view reference images for the non-anchor image are the motion dependencies between user-defined inter-view reference images for the viewpoint image.

35. The method according to claim 34, wherein: decoding the viewpoint image in motion skip mode comprises:
decoding the non-anchor image by using the motion dependencies between user-defined inter-view reference images for the viewpoint image according to the transmission indicator flag.

36. The method according to claim 30, wherein: decoding the viewpoint image in motion skip mode comprises:
obtaining motion information of the reference images of a current image from a motion information buffer according to the dependencies between the inter-view reference images for the anchor image and the dependency information sent by the coder, wherein the dependency information is about dependency between the reference images of the non-anchor image; and
performing decoding according to the motion information of the reference images to obtain the motion information of the current image.
